(19) Europäisches Patentamt
European Patent Office
Office européen des brevets

(11) **EP 4 629 318 A1**

(12) **EUROPEAN PATENT APPLICATION**
published in accordance with Art. 153(4) EPC

(43) Date of publication:
08.10.2025 Bulletin 2025/41

(21) Application number: 24840047.5

(22) Date of filing: 08.07.2024

(51) International Patent Classification (IPC):
H01M 4/133 (2010.01)        H01M 4/1393 (2010.01)
H01M 4/04 (2006.01)         H01M 4/525 (2010.01)
H01M 10/052 (2010.01)       H01M 4/02 (2006.01)

(52) Cooperative Patent Classification (CPC):
Y02E 60/10

(86) International application number:
PCT/KR2024/009716

(87) International publication number:
WO 2025/014236 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.07.2023 KR 20230089506

(71) Applicant: LG Energy Solution, Ltd.
Seoul 07335 (KR)

(72) Inventors:
• NOH, Suk In
  Daejeon 34122 (KR)
• LEE, Yong Ju
  Daejeon 34122 (KR)

(74) Representative: Plasseraud IP
104 Rue de Richelieu
CS92104
75080 Paris Cedex 02 (FR)

(54) **NEGATIVE ELECTRODE FOR LITHIUM SECONDARY BATTERY AND METHOD FOR MANUFACTURING SAME**

(57) Disclosed herein relates to a negative electrode for lithium secondary battery and a method for manufacturing the same, wherein the negative electrode includes a negative electrode active layer with a two-layer structure, and by controlling the average aspect ratio of the carbon-based negative electrode active material contained in each layer and the optical index (O.I.) with the negative electrode current collector to satisfy a predetermined range, the negative electrode has high adhesion to the negative electrode current collector and thus has excellent life characteristics. In addition, lithium secondary batteries containing the same have excellent output characteristics and can be charged in a short time even at 1C-rate.

EP 4 629 318 A1

**Description**

[Technical Field]

The present invention relates to a negative electrode for a lithium secondary battery and a manufacturing method thereof.

This application claims the benefit of priority from Korean Patent Application No. 10-2023-0089506, filed on July 11, 2023, the disclosure of which is incorporated herein by reference in its entirety.

[Background Technology of the Invention]

In recent years, lithium secondary batteries have been widely applied not only to small devices such as portable electronic devices, but also to medium and large devices such as battery packs or power storage devices for hybrid and electric vehicles. In particular, as environmental concerns have increased in recent years, there has been a lot of research on electric vehicles and hybrid electric vehicles that can replace vehicles that use fossil fuels, such as gasoline and diesel vehicles, which are major sources of air pollution.

Conventional lithium-ion batteries are limited to short-range electric vehicles due to their limited energy density. Therefore, technology has been intensively developed to increase the energy density of lithium secondary batteries.

However, the automotive lithium secondary batteries that have been developed suffer from a long charging time after discharging as the vehicle is driven. Therefore, with the increasing penetration of electric vehicles, there is a growing need to reduce the charging time to a level that is acceptable to the user.

Meanwhile, a lithium secondary battery is a rechargeable power generation device consisting of a laminated structure of positive electrode, separator, and negative electrode. When a lithium secondary battery is charged, a lithium deintercalation reaction is induced at the positive electrode of the battery, where lithium contained in the positive electrode active material is oxidized and released, and a lithium intercalation reaction occurs at the negative electrode, where lithium is reduced and enters the negative electrode active material. Generally, the deintercalation reaction in the positive electrode active material is faster than the intercalation reaction in the negative electrode active material, so the fast charge and discharge performance of a lithium secondary battery is mainly determined by the negative electrode.

Materials containing graphite are widely used as the negative electrode active material of the negative electrode. The average potential when the graphite-containing material releases lithium is about 0.2 V (based on $Li/Li^+$), and the discharge potential is relatively flat. For this reason, when graphite is used as the negative electrode active material, the voltage of the secondary battery is high and constant.

The negative electrode active materials used for negative electrodes are either amorphous or crystalline carbon, and crystalline carbon is mainly used due to its high capacity. These crystalline carbons include graphitic-based carbons such as natural graphite and artificial graphite.

Different types of graphite-based carbon have different properties. For example, natural graphite is inexpensive and exhibits excellent adhesion to the current collector, but is relatively inferior in terms of high rate charge/discharge performance and life characteristics compared to artificial graphite. However, since the artificial graphite has fewer surface defects and functional groups, its adhesion to the current collector is weak, and when propylene carbonate (PC) is mixed in the electrolyte to improve low-temperature performance, the propylene carbonate causes exfoliation and destruction of each layer of the interlayer structure of the graphite.

Therefore, attempts have been made to apply mixed graphite, which is a combination of natural and artificial graphite to utilize the advantages of each, as a negative electrode active material for lithium secondary batteries. However, the adhesion of such mixed graphite to the current collector is reduced, and it is difficult to reach a satisfactory level in terms of life characteristics and impact stability.

Therefore, there is a high need for a negative electrode technology with high adhesion to the current collector, excellent lifetime characteristics, high output characteristics, and fast charging characteristics to fundamentally solve these problems.

[Related-Art Document]

Korean Patent Laid-open Publication No. 10-2022-0064389

[Description of the Invention]

[Technical Problem]

It is an object of the present disclosure to provide a negative electrode for a lithium secondary battery having excellent life characteristics, excellent output characteristics, and fast charging characteristics due to high adhesion to a current collector and the like, and a manufacturing method thereof.

[Technical Solution]

To resolve the issues described above,
the present disclosure provides a negative electrode for lithium secondary battery including:

a negative electrode current collector,
a first negative electrode active layer provided on at least one side of the negative electrode current collector and comprising a first carbon-based negative electrode active material, and
a second negative electrode active layer provided on the first negative electrode active layer and comprising a second carbon-based negative electrode active material;
wherein the first carbon-based negative electrode active material has an average aspect ratio greater than 0.85;
wherein the second carbon-based negative electrode active material has an average aspect ratio less than or equal to 0.85; and
wherein the first negative electrode active layer has an optical index (O.I.) of the first carbon-based negative electrode active material of 50 or less according to Equation 1:

$$[\text{Equation 1}]$$

$$O.I. = I_{004}/I_{110}$$

in Equation 1,
$I_{004}$ represents the area of the peak representing the (004) crystal face in the X-ray diffraction spectroscopy (XRD) measurement of the negative electrode active layer,
$I_{110}$ represents the area of the peak representing the (110) crystal face in an X-ray diffraction (XRD) measurement of the negative electrode active layer.

Here, the first carbon-based negative electrode active material may have the average aspect ratio greater than 0.9 and less than 1.0, and the secondary carbon-based negative electrode active material may have the average aspect ratio of 0.2 or more and less than 0.8.
In addition, the second negative electrode active layer may have the optical index (O.I.) of the second carbon-based negative electrode active material of 0.01 to 10 according to Equation 1.
Moreover, the first carbon-based negative electrode active material and the second carbon-based negative electrode active material may include at least one of natural graphite and artificial graphite, respectively.
As an example, the first carbon-based negative electrode active material may be artificial graphite.
In addition, the second negative electrode active layer may have a porosity of 20% to 30%.
Moreover, the first negative electrode active layer may have a thickness ratio of from 1% to 100% based on an average thickness of the entire negative electrode active layer, and in this case, the entire negative electrode active layer may have an average thickness of 50 μm to 500 μm.
In addition, the present disclosure provides a manufacturing method of a negative electrode for lithium secondary battery of the present disclosure, the manufacturing method including:

applying a first negative electrode slurry and a second negative electrode slurry such that a first negative electrode slurry is located on at least one side of a negative electrode current collector and a second negative electrode slurry is located on the first negative electrode slurry;
applying a magnetic field to the applied first and second negative electrode slurries; and
drying first and second negative electrode slurries applied with magnetic field to form a negative electrode active layer.

Here, the step of applying a magnetic field may be performed for a period of from 1 second to 20 seconds.
In addition, the step of applying a magnetic field may be performed with a magnetic field strength of 1,000 G to 7,000 G.
Furthermore, the present disclosure provides a lithium secondary battery including:

an electrode assembly including a positive electrode, the negative electrode of the present disclosure, and a separator disposed between the positive electrode and the negative electrode; and

an electrolyte composition in which the electrode assembly is impregnated.

Here, the positive electrode may include a positive electrode active layer including one or more positive electrode active material among lithium metal oxide represented by Chemical Formula 1 and Chemical Formula 2 and provided on at least one side of the positive electrode current collector:

[Chemical Formula 1]        $Li_x[Ni_yCo_zMn_wM^1_v]O_2$

[Chemical Formula 2]        $LiM^2_pMn_{2-p}O_4$

in Chemical Formula 1 and Chemical Formula 2,

$M^1$ is at least one element selected from W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where $y+z+w+v=1$,
$M^2$ is Ni, Co, or Fe, and
p is $0.05 \leq p \leq 1.0$.

As an example, the positive electrode active materials may include one or more among $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, and $LiNi_{0.3}Mn_{1.7}O_4$.
Meanwhile, the electrode assembly may be a stack-type electrode assembly; a zigzag electrode assembly; or a zigzag-stack type electrode assembly.

[Advantageous Effects]

The negative electrode for a lithium secondary battery according to the present disclosure includes a negative electrode active layer with a two-layer structure, and by controlling the average aspect ratio of the carbon-based negative electrode active material contained in each layer and the optical index (O.I.) with the negative electrode current collector to satisfy a predetermined range, the negative electrode has high adhesion to the negative electrode current collector and thus has excellent life characteristics. In addition, lithium secondary batteries containing the same have excellent output characteristics and can be charged in a short time even at 1C-rate.

[Best Mode for Carrying out the Invention]

The present disclosure is subject to various modifications and can have many embodiments, certain of which are described in detail below.
However, this is not intended to limit the present disclosure to any particular aspect and is to be understood to include all modifications, equivalents, or substitutions that fall within the scope of the thought and technology of the present disclosure.
The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.
In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.
Further, in the present disclosure, "comprising as a major component" may mean comprising 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) of the defined component relative to the total weight (or total volume). For example, "comprising graphite as the major component of the negative electrode active material" may mean comprising at least 50 wt.%, at least 60 wt.%, at least 70 wt.%, at least 80 wt.%, at least 90 wt.%, or at least 95 wt.% graphite based on the total weight of the negative electrode active material, and in some cases may mean that the entire negative electrode active material is composed of graphite and comprises 100% graphite.
Further, as used herein, "carbon-based negative electrode active material is oriented" or "carbon-based negative electrode active material is aligned" means that certain crystal faces representing the two-dimensional planar structure of the carbon-based negative electrode active material comprising the negative electrode active material particles (e.g., the a-b axis crystal faces of graphite) are arranged to have a predetermined slope relative to the surface of the negative electrode current collector, which may be different from the carbon-based negative electrode active material particles themselves being arranged to have a specific orientation within the negative electrode active layer.

In addition, "highly oriented carbon-based negative electrode active material" may mean that certain crystal faces representing the two-dimensional planar structure of the carbon-based negative electrode active material contained in the negative electrode active material layer (e.g., the a-b axis crystal faces of graphite) have a high frequency of having a predetermined slope with respect to the surface of the negative electrode current collector. It may also mean, in some cases, that the crystal faces of the carbon-based negative electrode active material contained in the negative electrode active layer are arranged at a high angle (e.g., a near-vertical angle, greater than 45°; more specifically, greater than 60°) relative to the negative electrode current collector surface.

Furthermore, "high optical index of the carbon-based negative electrode active material" may refer to having a large value of the "optical index (O.I.)" referred to herein, meaning that certain crystal faces (e.g., a-b axis crystal faces of graphite) representing the two-dimensional planar structure of the carbon-based negative electrode active material contained in the negative electrode active layer are arranged at a low angle (e.g., less than 45°) relative to the surface of the negative electrode current collector. Conversely, "low optical index of the carbon-based negative electrode active material" may mean that the "optical index (O.I.)" has a small value, such that the crystal faces of the carbon-based negative electrode active material contained in the negative electrode active layer are arranged at a high angle (e.g., a near-vertical angle, greater than 45°; more specifically, greater than 60°) relative to the negative electrode current collector surface.

Furthermore, as used herein, "crystal face of a carbon-based negative electrode active material" refers to a face on which atoms of a carbon-based negative electrode active material form the shape of a crystal, which in the present disclosure may mean a crystal face comprising a plane of a carbon-based negative electrode active material, or a crystal face comprising an a-axis/b-axis/a-b-axis of a carbon-based negative electrode active material crystal.

Furthermore, as used herein, "average particle diameter ($D_{50}$)" means the particle diameter at which the sum value of the particle diameter distribution of the particles is 50%, which is also referred to as the median diameter. The average diameter may be measured using a laser diffraction particle size measurement device.

Further, as used herein, "aspect ratio" means the ratio of the longest dimension through the center of the two-dimensional particle to the shortest dimension when performing a cross-sectional structural analysis or projecting the negative electrode active material into a two-dimensional particle. Further, "average aspect ratio" means the number-weighted mean average of the aspect ratios of each particle in a population of active material particles. The aspect ratio may be determined by measuring it with a particle shape analyzer, or by measuring the shape of a two-dimensional projected particle using a scanning electron microscope (SEM), energy dispersive spectrometer, or the like, and then analyzing the measured results.

The present disclosure will be described in more detail below.

### Negative electrode for lithium secondary battery

The present disclosure provides a negative electrode for lithium secondary battery, the negative electrode including:

a negative electrode current collector,
a first negative electrode active layer provided on at least one side of the negative electrode current collector and comprising a first carbon-based negative electrode active material, and
a second negative electrode active layer provided on the first negative electrode active layer and comprising a second carbon-based negative electrode active;
wherein the first carbon-based negative electrode active material has an average aspect ratio greater than 0.85;
wherein the second carbon-based negative electrode active material has an average aspect ratio less than or equal to 0.85; and
wherein the first negative electrode active layer has an optical index (O.I.) of the first carbon-based negative electrode active material of 50 or less according to Equation 1:

$$[\text{Equation 1}]$$

$$O.I. = I_{004}/I_{110}$$

In Equation 1,

$I_{004}$ represents the area of the peak representing the (004) crystal face in the X-ray diffraction spectroscopy (XRD) measurement of the negative electrode active layer,

$I_{110}$ represents the area of the peak representing the (110) crystal face in an X-ray diffraction (XRD) measurement of the negative electrode active layer.

A negative electrode for lithium secondary battery according to the present disclosure includes a negative electrode active layer on at least one side of the negative electrode current collector. The negative electrode active layer is a layer that embodies the electrical activity of the negative electrode, and includes as a main component a negative electrode active material that embodies an electrochemical redox reaction during charging and discharging of the battery.

Here, the negative electrode active material is a carbon-based negative electrode active material, wherein the carbon-based negative electrode active material is a material having carbon atoms as its main component. Such a carbon-based negative electrode active material may include graphite. The graphite may include one or more of natural graphite and artificial graphite. In addition, graphite may further include graphitized mesophase calcined carbon (bulk mesophase) based on tar and pitch, coke (raw coke, green coke, pitch coke, needle coke, petroleum coke, etc.), etc., other than natural graphite and artificial graphite.

In one example, the negative electrode active layer according to the present disclosure may include artificial graphite exclusively. The present disclosure includes artificial graphite exclusively in the negative electrode active layer, which significantly improves the lifetime of the negative electrode, which can be advantageous in conditions where frequent charging must be withstood for a long time, such as in automotive batteries. Furthermore, compared to natural graphite, the artificial graphite has the advantage of being able to be charged at a faster rate and having superior output performance.

Furthermore, the negative electrode active layer may have a two-layer structure in which the first negative electrode active layer and the second negative electrode active layer are sequentially stacked on the negative electrode current collector. The two-layer structure of the negative electrode active layer facilitates control of the type, shape, size, etc. of the negative electrode active material contained in each layer. Therefore, the performance of the negative electrode can be improved by controlling the composition of the negative electrode active materials contained in each layer according to a specific purpose, such as improving the output of the battery or improving the adhesion between the negative electrode active layer and the negative electrode current collector. For example, a carbon-based negative electrode active material such as artificial graphite having a large capacity per unit weight/volume or a high output efficiency can be optionally applied to the second negative electrode active layer in contact with the separator, and a carbon-based negative electrode active material such as natural graphite having an excellent adhesion to the negative electrode current collector can be optionally applied to the first negative electrode active layer in contact with the negative electrode current collector.

In the present disclosure, the negative electrode active layer may comprise a first carbon-based negative electrode active material with a large average aspect ratio applied to the first negative electrode active layer and a second carbon-based negative electrode active material with a low average aspect ratio applied to the second negative electrode active layer.

The average aspect ratio of the carbon-based negative electrode active material is one of the indicators of the shape of the particles, and depending on the shape of the carbon-based negative electrode active material, the electrical performance or adhesion of the negative electrode active layer may differ. By differentiating the shape/form of the carbon-based negative electrode active material contained in each layer of the negative electrode active layer, the present disclosure can improve the adhesion between the negative electrode current collector and the negative electrode active layer while simultaneously improving the output and fast charging of the negative electrode.

Specifically, the first carbon-based negative electrode active material contained in the first negative electrode active layer may have an average aspect ratio greater than 0.85, and the second carbon-based negative electrode active material contained in the second negative electrode active layer may have an average aspect ratio of 0.85 or less.

For example, the first carbon-based negative electrode active material may have the average aspect ratio of 0.85 to 1.00; 0.85 to 0.99; 0.88 to 0.99; 0.90 to 0.99; 0.92 to 0.98; 0.88 to 0.96; 0.88 to 0.93; greater than 0.90 and less than 1.0. Further, the second carbon-based negative electrode active material may have the average aspect ratio of 0.10 to 0.85; 0.25 to 0.85; 0.25 to 0.80; 0.25 to 0.70; 0.25 to 0.60; 0.25 to 0.50; 0.25 to 0.40; 0.40 to 0.65; 0.50 to 0.80; 0.50 to 0.65; 0.60 to 0.85; 0.60 to 0.75; 0.70 to 0.85; 0.10 to 0.40; or 0.2 or more but less than 0.8.

In the present disclosure, the average aspect ratio greater than 0.85 may mean that the particles have a shape close to a spherical shape. Furthermore, in the present disclosure, the average aspect ratio of 0.85 or less, specifically 0.60 or less, may mean that the particles have the shape of an ellipsoid tensioned in any one direction with respect to the center of the particles. In other words, the present disclosure may include a first negative electrode active layer in contact with the current collector including a first carbon-based negative electrode active material that is close to spherical, and a second negative electrode active layer in contact with the separator including a second carbon-based negative electrode active material that is in the shape of an ellipsoid tensioned in any one direction with respect to the center of the particles. In this case, the adhesion between the first negative electrode active layer and the negative electrode current collector can be improved. Furthermore, the second negative electrode active layer in contact with the separator can further shorten the migration path of lithium ions, thereby increasing the output characteristics of the negative electrode and shortening the charging time.

Specifically, when the average aspect ratio of the first carbon-based negative electrode active material is reduced to 0.85 or less, the area where the first carbon-based negative electrode active material particles with a-b axis crystal faces aligned is in contact with the negative electrode current collector is significantly reduced, thereby reducing the adhesion between the negative electrode active layer and the negative electrode current collector. Furthermore, when the average aspect ratio of the carbon-based negative electrode active material exceeds 0.85, the electrical conductivity of the negative electrode active material itself can be increased, thereby increasing the capacity of the negative electrode.

In addition, when the average aspect ratio of the second carbon-based negative electrode active material exceeds 0.85, the conductivity of the second negative electrode active layer increases, but the tortuosity at the negative electrode surface increases significantly, which reduces the migration rate of lithium ions, resulting in a low charge rate limit when charging the secondary battery.

Further, the first carbon-based negative electrode active material and the second carbon-based negative electrode active material may have an average aspect ratio deviation of at least 0.2 and no more than 0.85. Specifically, the first carbon-based negative electrode active material and the second carbon-based negative electrode active material may have an average aspect ratio deviation of 0.2 to 0.8; 0.2 to 0.75; 0.2 to 0.55; 0.2 to 0.45; 0.2 to 0.35; 0.35 to 0.55; 0.4 to 0.7; 0.5 to 0.8; or 0.38 to 0.68.

By controlling the respective average aspect ratios and average aspect ratio deviations of the first carbon-based negative electrode active material and the second carbon-based negative electrode active material as described above, the present disclosure can further improve the output of the negative electrode while further strengthening the adhesion between the negative electrode active layer and the negative electrode current collector. Specifically, there is a limit where the effect of improving the adhesion between the negative electrode active layer and the negative electrode current collector is insignificant when the deviation of the average aspect ratio of the first carbon-based negative electrode active material and the second carbon-based negative electrode active material is 0.2 or less. In addition, the migration path of lithium ions in the second negative electrode active layer is significantly increased during charging and discharging of the secondary battery, which may result in poor fast charge and discharge performance. When the deviation of the average aspect ratio exceeds 0.85, the electrical resistance on the surface of the negative electrode active layer increases, so the charging and discharging performance of the negative electrode is inferior.

Furthermore, the first carbon-based negative electrode active material and the second carbon-based negative electrode active material may each have a shape satisfying the average aspect ratio described above, preferably a rounded particle shape rather than a plate-shaped, sheet-shaped, prismatic, needle-shaped, or the like shape. Here, rounded particle shape may mean particles with a cornerless shape. Such particles may be spherical or ellipsoidal in shape when cross-sectional structural analysis is performed or when projected as two-dimensional particles, and in some cases may be shapeless whose shape is difficult to define.

In one example, the first carbon-based negative electrode active material may be graphite having a spherical particle shape. The spherical particles may be processed to have a spherical shape/form during manufacturing, or may be a spherical graphite assembly formed by aggregation of a plurality of flaky graphite.

When the spherical particles are assemblies, one graphite assembly may be formed from 2 to 100, preferably 3 to 20, flaky graphite. By controlling the shape of the first carbon-based negative electrode active material as described above, the present disclosure can further increase the electrical conductivity of the negative electrode active layer, maximize the contact area with the negative electrode current collector, and improve the adhesion between the first negative electrode active layer and the negative electrode current collector.

As another example, the second carbon-based negative electrode active material may be ellipsoidal. In this case, the second carbon-based negative electrode active material may more easily secure a migration path for the lithium ions in the second negative electrode active layer, allowing charging to be completed in a shorter time even if charging is performed under the same conditions.

Furthermore, the first carbon-based negative electrode active material and the second carbon-based negative electrode active material may have a predetermined average particle diameter ($D_{50}$). For example, the average particle diameter ($D_{50}$) of the first carbon-based negative electrode active material and the second carbon-based negative electrode active material may be 0.1 $\mu$m to 20 $\mu$m, and more specifically, 5 $\mu$m to 20 $\mu$m; 10 $\mu$m to 20 $\mu$m; 11 $\mu$m to 19 $\mu$m; 8 $\mu$m to 15 $\mu$m; 15 $\mu$m to 20 $\mu$m; 13 $\mu$m to 19 $\mu$m; 14 $\mu$m to 17 $\mu$m; 5 $\mu$m to 8 $\mu$m; 0.1 $\mu$m to 15 $\mu$m; 0.1 $\mu$m to 10 $\mu$m; 0.1 $\mu$m to 8 $\mu$m; 0.1 $\mu$m to 5 $\mu$m; 0.1 $\mu$m to 3 $\mu$m; 0.1 $\mu$m to 1 $\mu$m; 0.5 $\mu$m to 10 $\mu$m; 0.5 $\mu$m to 5 $\mu$m; 0.5 $\mu$m to 4.5 $\mu$m; 0.5 $\mu$m to 3 $\mu$m; 1 $\mu$m to 4.5 $\mu$m; 1 $\mu$m to 3 $\mu$m; or 0.8 $\mu$m to 1.8 $\mu$m.

The present disclosure may suppress the increase in electrical resistance of the first negative electrode active layer in the above range. Furthermore, in the above average particle diameter range, the first carbon-based negative electrode active material may increase the specific surface area while maximizing the disorder of the expansion direction for each of the particles so as to prevent the expansion of the particles due to the charging of lithium ions, thereby further increasing the adhesion between the first negative electrode active layer and the negative electrode current collector. Furthermore, the present disclosure has the advantage of being able to increase the electrical conductivity of the second negative electrode active layer containing the second carbon-based negative electrode active material in the above range, and at the same time secure a migration path for lithium ions.

Meanwhile, if the first carbon-based negative electrode active material and the second carbon-based negative electrode active material have a particle diameter lower than the lower limit of the average particle diameter ($D_{50}$), a large amount of binder is required due to an increase in the number of particles per unit volume, and thus the electrical properties of the negative electrode active layer including the negative electrode active material may be degraded. On the other hand, if the particle diameter is higher than the upper limit of the average particle diameter ($D_{50}$), the expansion rate of the negative electrode active material increases significantly during the charge and discharge of the secondary battery, so that the cohesion between the negative electrode active material particles and the cohesion between the negative electrode active material particles and the current collector decreases as the charge and discharge are repeated, and the cycling characteristics may be significantly reduced.

Furthermore, the negative electrode according to the present disclosure may have controlled crystal structure characteristics of the carbon-based negative electrode active materials contained in the first negative electrode active layer and the second negative electrode active layer, respectively, in order to realize a fast charging speed while increasing the adhesion between the first negative electrode active layer and the negative electrode current collector.

In one example, the first negative electrode active layer may have an optical index (O.I.) of the first carbon-based negative electrode active material according to Equation 1 of 50 or less. Also, the second negative electrode active layer may have an optical index (O.I) of the second carbon-based negative electrode active material according to Equation 1 of 0.02 to 10:

$$[\text{Equation 1}]$$

$$\text{O.I.} = I_{004}/I_{110}$$

in Equation 1,

$I_{004}$ represents the area of the peak representing the (004) crystal face in the X-ray diffraction spectroscopy (XRD) measurement of the negative electrode active layer,

$I_{110}$ represents the area of the peak representing the (110) crystal face in an X-ray diffraction (XRD) measurement of the negative electrode active layer.

The optical index (O.I.) of the carbon-based negative electrode active material may be an indicator of the degree to which the ab-axis crystal face of the carbon-based negative electrode active material is oriented in a certain direction, specifically with respect to the surface of the negative electrode current collector, when measured by X-ray diffraction (XRD). Specifically, the negative electrode active layer exhibits peaks at $2\theta=26.5\pm0.2°$, $42.4\pm0.2°$, $43.4\pm0.2°$, $44.6\pm0.2°$, $54.7\pm0.2°$, and $77.5\pm0.2°$ for graphite, a carbon-based negative electrode active material, in X-ray diffraction measurements. These represent the (002), (100), (101)R, (101)H, (004), and (110) faces of graphite. The peak at $2\theta=43.4\pm0.2°$ can also be seen as an overlap of the peaks corresponding to the (101)R face of carbon-based negative electrode active materials and the (111) face of current collectors, such as copper (Cu).

Among them, the ratio of the area obtained by integrating the respective intensities of the peak at $2\theta=54.7\pm0.2°$ representing the (004) face and the peak at $2\theta=77.5\pm0.2°$ representing the (110) face can be used to measure the optical index (O.I.) of carbon-based negative electrode active materials.

Since the peak at $2\theta=54.7\pm0.2°$ is a peak representing a crystal face of the carbon-based negative electrode active material having a slope with the negative electrode current collector among the crystal face of the negative electrode active material, the above optical index (O.I.) may mean that the slope with respect to the surface of the negative electrode current collector is close to 90° when the value is close to 0, and the slope with respect to the surface of the negative electrode current collector is close to 0° or 180° when the value is larger. In other words, the negative electrode active layer according to the present disclosure may be aligned such that the carbon-based negative electrode active material contained in the layer has an angle of 60° or more, 70° or more, 70-90°, 80-90°, 65-85°, or 70-85° with respect to the negative electrode current collector. Accordingly, the negative electrode active layer may have a lower optical index (O.I.) of the carbon-based negative electrode active material compared to a case where the carbon-based negative electrode active material is aligned at a lower angle of less than 60°. Here, the optical index (O.I.) refers to the degree of alignment of the ab-axis crystal faces of the carbon-based negative electrode active material. Alignment of the ab-axis crystal face of the carbon-based negative electrode active material may also induce rotation of the particles of the carbon-based negative electrode active material contained in the negative electrode active layer. However, since the rotation of the particles at this time is affected by the shape of the particles and is therefore not equivalent to the alignment of the ab-axis crystal faces, it may be difficult for the optical index (O.I.) to indicate the alignment of the particles of the carbon-based negative electrode active material

Here, the first carbon-based negative electrode active material contained in the first negative electrode active layer may have an optical index $(O.I._{1st})$ of 50 or less, more specifically, greater than 10 but less than or equal to 50; 11 to 45; 11 to 40; 11 to 35; 11 to 30; 11 to 25; 11 to 20; 11 to 15; 15 to 25; 15 to 20; 15 to 19; 13 to 18; 16 to 24; 21 to 29; or 19 to 26.

If the optical index $(O.I._{1st})$ of the first carbon-based negative electrode active material contained in the first negative electrode active layer is less than the lower limit described above, the adhesion to the negative electrode current collector may be reduced. Therefore, by adjusting the optical index $(O.I._{1st})$ of the first carbon-based negative electrode active material contained in the first negative electrode active layer as described above, the adhesion between the first negative electrode active layer and the negative electrode current collector can be improved to the extent that the proportion of the crystal faces of the carbon-based negative electrode active material molecules comprising the negative electrode active material particles facing the negative electrode current collector are increased to the extent that the fast charging performance of the negative electrode is not reduced.

Furthermore, the second carbon-based negative electrode active material contained in the second negative electrode active layer may have an optical index $(O.I._{2nd})$ of 0.01 to 10, more specifically, 0.01 to 9; 0.01 to 7; 0.01 to 5; 0.01 to 3; 1 to 9; 3 to 9; 5 to 9; 3 to 8; 4 to 7; 6 to 10; 4 to 9; 0.01 to 4; 0.1 to 2.5; 0.1 to 2.0; 0.1 to 1.5; 0.2 to 1.3; 0.4 to 1.3; 0.4 to 1.0; 0.5 to 1.3; 1.1 to 1.3; 0.5 to 0.9; or 0.4 to 0.6.

By adjusting the optical index $(O.I._{2nd})$ of the second carbon-based negative electrode active material contained in the second negative electrode active layer as described above, the present disclosure can obtain an ion migration channel in which lithium ions can migrate in a shorter distance inside the negative electrode active layer. As a result, the negative electrode of the present disclosure can prevent an increase in resistance due to a long migration distance of lithium ions, thereby further increasing the migration speed of lithium ions during charging and discharging, thereby simultaneously improving fast charging performance and power output performance with high safety.

Specifically, conventional fast charging of lithium secondary batteries has been applied in a constant current-constant voltage (CC-CV) method to increase the rate by performing charging under high C-rate conditions exceeding 1C-rate. In general, in constant current-constant voltage (CC-CV) charging, the diffusion of lithium ions in the electrode during charging proceeds during the constant current (CC) charging stage, which inevitably causes concentration polarization due to prolonged diffusion. This concentration polarization of lithium ions easily causes lithium precipitation at the negative electrode, especially under high rate conditions where the amount of current (A) charged relative to the rated capacity value (Ah) of the secondary battery exceeds the standard value (i.e., the amount of current at 1C-rate: 1A), which has the limitation of significantly lowering the safety of the secondary battery. In addition, high-rate constant-current-constant-voltage (CC-CV) charging reaches the upper limit voltage very quickly during the constant-current (CC) charging stage, so the current may drop to a preset limit before the active material is fully consumed. This means that the charging time is significantly increased during the constant-voltage (CV) charging stage, so the reduction in the total time to charge the secondary battery is insignificant.

However, since the present disclosure can secure a shorter migration channel for lithium ions in the negative electrode active layer, the resistance induced in the negative electrode active layer during charging can be significantly reduced. This resistance reduction can lead to a longer duration of the constant current (CC) charging step than the constant voltage (CV) charging step in the total charging time when charging in a constant current-constant voltage (CC-CV) manner. Here, the constant current (CC) charging step has the same charging capacity per unit time because the same amount of current flows, but the constant voltage (CV) charging step tends to reduce the current in order to maintain the same voltage, i.e., the charging capacity per unit time is sharply reduced in the constant voltage (CV) charging step, so that the overall charging time can be significantly reduced as the execution time of the constant current (CC) charging step increases. Therefore, the present disclosure can increase the execution time of the constant current (CC) charging step by controlling the optical index $(O.I._{2nd})$ of the second carbon-based negative electrode active material, thereby enabling the charging of the secondary battery to be completed in a significantly shorter time.

Furthermore, fast charging of such a secondary battery can be realized under standard value (e.g., 1C-rate) conditions rather than high-rate C-rate conditions, which has the advantage of overcoming the safety issues of lithium secondary batteries due to the concentration polarization of lithium ions induced in the negative electrode active layer during charging.

Meanwhile, the negative electrode active layer, in particular the second negative electrode active layer, may have a porosity of from 20% to 30%. In particular, the second negative electrode active layer may have a porosity of 23% to 30%; 25% to 30%; 26% to 29%; or 24% to 28%.

In this case, the second negative electrode active layer may exhibit a BET specific surface area of 0.62 $m^2/g$ or less. Specifically, the second negative electrode active layer may exhibit a BET specific surface area of 0.615 $m^2/g$ or less,

0.6 m$^2$/g or less, 0.5 m$^2$/g or less, 0.20 to 0.62 m$^2$/g, 0.30 to 0.62 m$^2$/g, 0.40 to 0.62 m$^2$/g, 0.40 to 0.60 m$^2$/g, 0.40 to 0.55 m$^2$/g, 0.40 to 0.50 m$^2$/g, or 0.58 to 0.62 m$^2$/g. Here, the specific surface area may be measured by the Brunauer-Emmett-Teller (BET) method. For example, it can be measured by the BET six-point method by the nitrogen gas adsorption distribution method using a pore distribution analyzer (Porosimetry analyzer; Bell Japan Inc, Belsorp-II mini).

By adjusting the porosity and/or BET specific surface area of the second negative electrode active layer, which is located at the outermost part among the negative electrode active layers and is in direct contact with the electrolyte, to the above range, the energy density of the negative electrode can be further increased without degradation of the electrolyte wettability of the negative electrode active layer.

Further, the average thickness of the entire negative electrode active layer may be from 50 μm to 500 μm, more specifically from 100 μm to 400 μm; from 200 μm to 350 μm; from 50 μm to 180 μm; from 80 μm to 150 μm; from 100 μm to 250 μm; or from 130 μm to 190 μm. By adjusting the average thickness of the negative electrode active layer to the above range, the present disclosure can easily control the crystal characteristics of each carbon-based negative electrode active material contained in the first negative electrode active layer and the second negative electrode active layer. Accordingly, the negative electrode of the present disclosure not only realizes high adhesion between the first negative electrode active layer and the negative electrode current collector, but also has the advantage of fast charging, which can complete charging in a short time even under standard conditions (1C-rate).

Further, the first negative electrode active layer and the second negative electrode active layer may each have the same or different average thickness. Specifically, the average thickness of the first negative electrode active layer ($D_1$) may have a ratio of 1% to 100% based on the average thickness of the second negative electrode active layer ($D_2$), and more specifically, it may have a ratio of 1% to 50%; 1% to 40%; 1% to 30%; 1% to 20%; 1% to 10%; 1% to 5%; 5% to 10%; 10% to 20%; or 15% to 30%. By adjusting the average thickness ratio of the first negative electrode active layer to the above range, the present disclosure can realize a high charge and discharge capacity while maintaining a high durability of the negative electrode, and can maximize the output characteristics.

Furthermore, the first negative electrode active layer and the second negative electrode active layer according to the present disclosure may optionally further include, in addition to the negative electrode active material as the main component, conductive materials, binders, other additives, etc. as required.

The conductive material may include one or more of carbon black, acetylene black, ketjen black, carbon nanotubes, carbon fiber, and the like, but is not limited thereto.

In one example, as a conductive material, the negative electrode active layer may contain carbon black, carbon nanotubes, carbon fibers, or the like alone or in combination.

In this case, the content of the conductive material may be from 0.1 to 10 parts by weight for a total of 100 parts by weight of the negative electrode active layer, and more specifically, it may be from 0.1 to 8 parts by weight, from 0.1 to 5 parts by weight, from 0.1 to 3 parts by weight, from 2 to 6 parts by weight, or from 0.5 to 2 parts by weight. By controlling the content of the conductive material in the range as described above, the present disclosure can prevent the resistance of the negative electrode from increasing due to a low content of the conductive material, resulting in a decrease in the charging capacity, and the content of the negative electrode active material from decreasing due to an excessive amount of the conductive material, resulting in a decrease in the charging capacity or a decrease in the fast charging characteristic due to an increase in the loading amount of the negative electrode active layer.

Furthermore, the binder is a component that assists in the coupling of the negative electrode active material and the conductive material and the coupling to the current collector, and may be suitably applied to the extent that it does not degrade the electrical properties of the electrode, but more particularly may include one or more selected from the group consisting of vinylidene fluoride-hexafluoropropylene copolymer (PVDF-co-HFP), polyvinylidenefluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorinated rubber.

The content of the binder may be from 0.1 to 10 parts by weight, and more specifically from 0.1 to 8 parts by weight, from 0.1 to 5 parts by weight, from 0.1 to 3 parts by weight, or from 2 to 6 parts by weight, based on a total of 100 parts by weight of the negative electrode active layer. By controlling the content of the binder contained in the negative electrode active layer to the above range, the present disclosure can prevent the adhesion of the active layer from deteriorating due to a low content of binder or the electrical properties of the electrode from deteriorating due to an excess of binder.

Furthermore, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, those that are surface-treated with carbon, nickel, titanium, silver, and the like can also be used. Furthermore, the average thickness of the negative electrode current collector may be suitably applied from 1 μm to 500 μm, considering the conductivity and total thickness of the negative electrode to be manufactured.

# EP 4 629 318 A1

## Lithium secondary battery

Furthermore, the present disclosure provides a lithium secondary battery, the lithium secondary battery including:

> an electrode assembly including a positive electrode, the negative electrode of the present disclosure as described above, and a separator disposed between the positive electrode and negative electrode; and
> an electrolyte composition in which the electrode assembly is impregnated.

The lithium secondary battery according to the present disclosure includes an electrode assembly having a structure in which a plurality of positive electrodes and a plurality of negative electrodes are arranged alternately and a separator is positioned between them. The lithium secondary battery having the negative electrode of the present disclosure described above not only has excellent output characteristics, but also can be charged in a short time even at 1C-rate, and is therefore useful as a power source for medium and large devices such as electric vehicles.

In this case, the negative electrode has the same configuration as the configuration described above, so the specific description is omitted.

Further, the positive electrode may include a positive electrode active layer including a positive electrode active material on the positive electrode current collector, the positive electrode active layer optionally further including a conductive material, a binder, other additives, and the like as required.

The positive electrode active material may include one or more of the lithium metal oxides represented by Chemical Formula 1 and Chemical Formula 2, which are capable of reacting electrochemically on the positive electrode current collector to reversibly intercalate and deintercalate lithium ions:

$$[\text{Chemical Formula 1}] \qquad Li_x[Ni_yCo_zMn_wM^1_v]O_2$$

$$[\text{Chemical Formula 2}] \qquad LiM^2_pMn_qP_rO_4$$

in Chemical Formula 1 and Chemical Formula 2,

$M^1$ is at least one element selected from W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where $y+z+w+v=1$,
$M^2$ is Ni, Co, or Fe,
p is $0.05 \leq p \leq 1.0$,
q is 2-p and,
r is 0 or 1.

Lithium metal oxides, represented by Chemical Formula 1 and Chemical Formula 2 above, are materials containing a high content of nickel (Ni) and manganese (Mn), respectively, and when used as a positive electrode active material, have the advantage of being able to stably supply high capacity and/or high voltage electricity compared to conventionally used positive electrode active materials such as lithium iron phosphate ($LiFePO_4$).

In this case, the lithium metal oxide represented by Chemical Formula 1 may include $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, and the like. Further, the lithium metal oxide represented by Chemical Formula 2 may include $LiNi_{0.7}Mn_{1.3}O_4$; $LiNi_{0.5}Mn_{1.5}O_4$; $LiNi_{0.3}Mn_{1.7}O_4$ and the like. The lithium metal oxides represented by Chemical Formula 1 and/or Chemical Formula 2 may be used alone or in combination.

Furthermore, the positive electrode active material may be included in an amount of 85 parts by weight or more with respect to the weight of the positive electrode active layer, and more specifically may be included in an amount of at least 90 parts by weight, at least 93 parts by weight, or at least 95 parts by weight.

Furthermore, the positive electrode active layer may further include a conductive material, a binder, other additives, etc. in addition to the positive electrode active material.

In this case, the conductive material used to improve the electrical performance of the positive electrode may be any of those conventionally used in the art, but may specifically include one or more of natural graphite, artificial graphite, carbon black, acetylene black, denka black, ketjen black, super-P, channel black, furnace black, lamp black, thermal black, graphene, and carbon nanotubes.

Furthermore, the conductive material may be included in an amount of 0.1 to 5 parts by weight based on 100 parts by weight of the positive electrode active layer, more specifically, may be included in an amount of 0.1 to 4 parts by weight; 2 to 4 parts by weight; 1.5 to 5 parts by weight; 1 to 3 parts by weight; 0.1 to 2 parts by weight; or 0.1 to 1 part by weight.

Furthermore, the binder serves to bind the positive electrode active material, positive electrode additive, and conductive material to each other, and may be used without limitation as long as it has this function. Specifically, the binder may include one or more resins selected from polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidenefluoride.

Additionally, the binder may be included in an amount of 1 to 10 parts by weight based on 100 parts by weight of the positive electrode active layer, more specifically, 2 to 8 parts by weight; or 1 to 5 parts by weight.

The total thickness of the positive electrode active layer is not particularly limited, but may be from 50 $\mu$m to 300 $\mu$m, more specifically from 100 $\mu$m to 200 $\mu$m; from 80 $\mu$m to 150 $\mu$m; from 120 $\mu$m to 170 $\mu$m; from 150 $\mu$m to 300 $\mu$m; from 200 $\mu$m to 300 $\mu$m; or from 150 $\mu$m to 190 $\mu$m.

Furthermore, as a positive electrode current collector, the positive electrode may use those having a high conductivity without causing chemical changes in the battery. For example, stainless steel, aluminum, nickel, titanium, calcined carbon, and the like can be used, and in the case of aluminum or stainless steel, those that are surface treated with carbon, nickel, titanium, silver, and the like can also be used. Furthermore, the average thickness of the current collector may be suitably applied from 3 to 500 $\mu$m, considering the conductivity and total thickness of the positive electrode being manufactured.

Furthermore, the separator interposed between the positive electrode and the negative electrode of each unit cell is an insulating thin film having high ionic permeability and mechanical strength, and may use those including one or more polymers such as, but not particularly limited to, those conventionally used in the art, such as polypropylene, polyethylene, and polyethylene-propylene copolymers, which are chemically resistant and hydrophobic. The separator may take the form of a porous polymeric substrate, such as a sheet or nonwoven fabric including the polymer described above, and in some cases may take the form of a composite separator in which organic or inorganic particles are coated by an organic binder on the porous polymeric substrate. Furthermore, the separator may have an average diameter of the pores of 0.01 to 10 $\mu$m, and an average thickness of 5 to 300 $\mu$m.

Meanwhile, the lithium secondary battery according to the present disclosure may be shaped, without being particularly limited, to include a stack-type; zigzag; or zigzag-stack type electrode assembly. As one example, the lithium secondary battery according to the present disclosure may be a pouch-type secondary battery or a prismatic secondary battery.

Pouch-type and/or prismatic secondary batteries have the advantage of being highly utilizable in terms of energy density, as they can pack a high density of secondary battery unit cells within a limited space.

Furthermore, in the lithium secondary battery, the electrolyte composition may be used without limitation as long as it is conventionally applied to lithium secondary batteries.

Specifically, the electrolyte composition may include a non-aqueous organic solvent, a lithium salt, and an electrolyte additive.

Here, the non-aqueous organic solvent may be any organic solvent known in the art for use in non-aqueous electrolytes, without limitation. For example, the non-aqueous organic solvents may use aprotic organic solvents such as N-methyl-2-pyrrolidinone, ethylene carbonate (EC), propylene carbonate (PC), butylene carbonate, dimethyl carbonate (DMC), diethyl carbonate (DEC), gamma-butylolactone, 1,2-dimethoxyethane (DME), tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxymethane, dioxolane derivatives, sulfolane, methyl sulfolane, 1,3-dimethyl-2-imidazolidinone, propylene carbonate derivatives, tetrahydrofuran derivatives, ether, methyl pyrophosphate (MP), ethyl propionate (EP), and propyl propionate (PP).

Furthermore, the non-aqueous organic solvents utilized in the present disclosure may be used alone, or two or more may be mixed in any combination or ratio to suit the application. Among them, from the viewpoint of electrochemical stability against redox and chemical stability against heat and reaction with solutes, it is particularly preferable to mix propylene carbonate, ethylene carbonate, fluoroethylene carbonate, diethyl carbonate, dimethyl carbonate, ethyl methyl carbonate, and the like.

Furthermore, the lithium salts can be applied without limitation to any non-aqueous electrolyte known in the art. Specifically, the lithium salts may include one or more of $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, and $(FSO_2)_2NLi$.

The lower limit of the suitable concentration range for proper use of the lithium salt is 0.5 mol/L. or more, more particularly 0.7 mol/L or more, more particularly 0.9 mol/L or more, and the upper limit is 2.5 mol/L or less, more particularly 2.0 mol/L or less, more particularly 1.5 mol/L or less. When the concentration of lithium salt is lower than 0.5 mol/L, there is a possibility that the cycle characteristics and output characteristics of the non-aqueous electrolyte battery may be degraded due to a decrease in ionic conductivity. In addition, if the concentration of lithium salt exceeds 2.5 mol/L, the viscosity of the electrolyte for non-aqueous electrolyte battery increases, which may also reduce the ionic conductivity and may reduce the cycle characteristics and output characteristics of non-aqueous electrolyte battery.

In addition, when a large amount of lithium salt is dissolved in a non-aqueous organic solvent at one time, the temperature of the electrolyte may increase due to the heat of dissolution of the lithium salt. In the case of lithium salts containing fluorine, if the temperature of the non-aqueous organic solvent rises significantly due to the heat of dissolution of the lithium salt, it may accelerate decomposition and produce hydrogen fluoride (HF). Hydrogen fluoride (HF) is undesirable because it causes battery performance degradation. Therefore, the temperature of dissolving the lithium salt in the non-aqueous organic solvent is not particularly limited, but may be controlled between -20 and 80°C, and more particularly between 0 and 60°C.

Furthermore, the electrolyte additive may be included as additional auxiliary components to improve the properties of the electrolyte composition. Electrolyte additives commonly utilized in non-aqueous electrolytes of the present disclosure may be added in any proportion. Specifically, compounds having an overcharge prevention effect, a negative electrode film forming effect, a positive electrode protection effect, such as cyclohexylbenzene, biphenyl, t-butylbenzene, carbonate, vinyl ethylene carbonate, difluoroanisole, fluoroethylene carbonate, propanesultone, succinonitrile, dimethylvinylene carbonate, and the like may be used.

In addition, it is possible to use electrolyte solutions for non-aqueous electrolyte batteries, such as those used in non-aqueous electrolyte batteries called lithium polymer cells, by gelling agents or cross-linking polymers.

The lithium secondary battery according to the present disclosure has the advantage of having the above-described configuration, which not only provides the battery with excellent output characteristics, but also allows it to be charged in a short time, even at 1C-rate.

## Manufacturing method of a negative electrode

In addition, the present disclosure provides a manufacturing method of a negative electrode for lithium secondary battery, the manufacturing method including:

applying a first negative electrode slurry and a second negative electrode slurry such that a first negative electrode slurry is located on at least one side of a negative electrode current collector and a second negative electrode slurry is located on the first negative electrode slurry;
applying a magnetic field to the applied first and second negative electrode slurries; and
drying the first and second negative electrode slurries applied with magnetic field to form a negative electrode active layer.

A method of manufacturing a negative electrode according to the present disclosure means a method of manufacturing the negative electrode of the present disclosure as described above. The method of manufacturing the negative electrode can produce a negative electrode having a negative electrode active layer having a controlled crystal characteristic of the negative electrode active material by applying a negative electrode slurry on the negative electrode current collector, applying a magnetic field to the surface of the applied negative electrode slurry, and drying each negative electrode slurry.

Here, the step of applying the negative electrode slurry includes coating the surface of the moving negative electrode current collector by discharging a negative electrode slurry containing a carbon-based negative electrode active material. This step may be applied in any manner conventionally practiced in the art without limitation, but preferably utilizes a die coating method. The die coating method may be performed by means of a slot die having a shim for controlling the discharge conditions of the negative electrode slurry. In this case, by controlling the shape, position, etc. of the shim, the loading amount, application thickness, etc. of the negative electrode slurry applied to the negative electrode current collector can be easily controlled.

In particular, the present disclosure utilizes a dual die to simultaneously apply a first negative electrode slurry and a second negative electrode slurry on the negative electrode current collector. This has the advantage of significantly increasing the process efficiency compared to applying each slurry sequentially.

Meanwhile, the step of applying a magnetic field to the negative electrode slurry may be a step of controlling the crystal characteristics of the negative electrode active material contained in the negative electrode slurry. Specifically, the step may apply a magnetic field to a surface of the second negative electrode slurry applied on the negative electrode current collector to align the ab-axis crystal faces of each carbon-based negative electrode active material contained in the second negative electrode slurry and the first negative electrode slurry located at the lower part thereof at a high angle with respect to the negative electrode current collector.

In this case, the magnetic field application may be applied by magnetic parts disposed on the upper and lower parts of the negative electrode current collector, which is moved with a negative electrode slurry applied to its surface. The polarity of the upper and lower magnetic parts may be different.

Furthermore, the optical index (O.I.) of the carbon-based negative electrode active material contained in each negative electrode slurry can be adjusted by the applied magnetic field strength, the applied time, and the like, so that the step of applying the magnetic field can be performed under a predetermined magnetic field strength condition.

Specifically, the step of applying the magnetic field may include applying a magnetic field of 10,000 G (Gauss) or less, more specifically, 1,000 G to 7,000 G; 2,000 G to 6,000 G; 1,500G to 5,000G; 1,500G to 4,500G; 4,000G to 7,000G; 2,000G to 4,000G; 2,500G to 3,500G; 3,000G to 6,500G; or 2,700G to 3,300G.

Further, the step of applying the magnetic field may be performed for a period of 1 to 20 seconds, more specifically, for a period of 1 to 15 seconds; 1 to 10 seconds; 5 to 20 seconds; 10 to 20 seconds; 11 to 18 seconds; 1 to 5 seconds; 7 to 13 seconds; or 6 to 11 seconds.

In one example, the step of applying the magnetic field may include applying a magnetic field of $3,000\pm50$ G to the negative electrode slurry for 9 to 11 seconds.

Further, the step of applying the magnetic field may be performed by magnetic parts introduced on the upper and lower parts of the applied negative electrode slurry, as mentioned above, but the size of the magnetic parts may be adjusted to be larger than the size of the negative electrode slurry so that the magnetic field applied to the negative electrode slurry can be applied uniformly over the entire surface of the negative electrode slurry. For example, the magnetic part may have a length ratio of 105% to 200% based on the length in the width direction of the negative electrode slurry, more specifically, it may have a length ratio of 110% to 180%; 110% to 160%; 110% to 140%; 110% to 130%; 130% to 150%; or 105% to 120% based on the length in the width direction of the negative electrode slurry.

In the step of applying a magnetic field, the present disclosure can uniformly realize the optical index (O.I.) of the carbon-based negative electrode active material contained in the negative electrode slurry to satisfy a predetermined range by controlling the magnetic field strength, application time, and/or magnetic part size as described above.

Further, the step of forming the negative electrode active layer may include the steps of drying the negative electrode slurry; and rolling the dried negative electrode slurry.

In this case, the step of drying the negative electrode slurry may be applied without limitation as long as it is a manner that is capable of maintaining the orientation of the carbon-based negative electrode active material contained within the negative electrode active layer.

For example, the drying step may be performed by applying heat energy to the negative electrode slurry using a hot air dryer, a vacuum oven, or the like to dry the negative electrode slurry.

Further, the step of rolling the dried negative electrode slurry is a step of increasing the density of the negative electrode active layer by applying pressure to the dried negative electrode slurry using a roll press or the like. In this case, the rolling may be performed at a temperature condition higher than room temperature.

Specifically, the rolling may be performed at a temperature of 50°C to 100°C, more specifically at a temperature of 60°C to 100°C; 75°C to 100°C; 85°C to 100°C; 50°C to 90°C; 60°C to 80°C; or 65°C to 90°C. More specifically, the rolling may be performed at a rolling speed of 2 m/s to 7 m/s, or more specifically, 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s. Furthermore, the rolling may be performed under a pressure condition of 50 MPa to 200 MPa, more specifically, under a pressure condition of 50 MPa to 150 MPa; 50 MPa to 100 MPa; 100 MPa to 200 MPa; 150 MPa to 200 MPa; or 80 MPa to 140 MPa.

By performing the rolling of the dried negative electrode slurry under the above temperature, speed and/or pressure conditions, the present disclosure can increase the energy density of the negative electrode while minimizing the change in the alignment of the carbon-based negative electrode active material contained in the negative electrode active layer formed.

Hereinafter, the present disclosure will be described in more detail by way of Examples and Experimental Examples.

However, the following Examples and Experimental Examples are only illustrative of the present disclosure, and the disclosure is not limited to the following Examples and Experimental Examples.

**Examples 1-4 and Comparative Examples 1-3. Preparation of a negative electrode for a lithium secondary battery**

As a first carbon-based negative electrode active material, a first artificial graphite with an average secondary particle diameter ($D_{50}$) of $15.5\pm0.1$ $\mu$m was prepared by assembling flaky primary particles; as a second carbon-based negative electrode active material, a second artificial graphite with an average particle diameter ($D_{50}$) of $16\pm0.1$ $\mu$m was prepared. In addition, carbon black as a conductive material and carboxymethylcellulose (CMC) and styrene butadiene rubber (SBR) as binders were prepared.

A first negative electrode slurry was then prepared by mixing 96 parts by weight of first artificial graphite, 1.5 parts by weight of carboxymethylcellulose (CMC), and 2.5 parts by weight of styrene butadiene rubber (SBR) with water to achieve 50% solids.

In addition, a second negative electrode slurry was prepared by mixing 96 parts by weight of second artificial graphite, 1.5 parts by weight of carboxymethylcellulose (CMC), and 2.5 parts by weight of styrene butadiene rubber (SBR) with water to achieve 50% solids.

Once each negative electrode slurry was prepared, the first negative electrode slurry and the second negative electrode slurry was cast onto a copper thin plate (thickness: 10 μm) under roll-to-roll transfer (transfer speed: 5 m/min) simultaneously using a dual die coater.

Permanent magnets with a length ratio of 110% to 120% with respect to the length in the width direction of the negative electrode slurry were placed at the upper part of the applied negative electrode slurry and at the lower part of the negative electrode current collector, and a magnetic field was applied with a field strength of 3,000±20 G. The time of magnetic field application is shown in Table 1. The magnetized negative electrode slurry was hot air dried to form a negative electrode in the form of a first negative electrode active layer and a second negative electrode active layer sequentially stacked on the negative electrode current collector. The formed negative electrode active layer was rolled at a pressure of 100-150 MPa and a transfer rate of 3 m/s at 50±1°C to prepare negative electrodes for lithium secondary batteries (average thickness of first and second negative electrode active layers: 60±5 μm and 160±5 μm, respectively, loading amount: 5-20 mg/cm$^2$).

For each prepared negative electrode, scanning electron microscopy (SEM) analysis of the negative electrode active layer cross-section was performed to obtain spectroscopic images. The obtained images were analyzed to calculate the average aspect ratio of each of the artificial graphite contained in the first and second negative electrode active layers. This average aspect ratio is the ratio of the shortest dimension to the longest dimension through the center of the artificial graphite particles. The results are shown in Table 1 below.

In addition, for each manufactured negative electrode, X-ray diffraction spectroscopy (XRD) of the first negative electrode active layer and the second negative electrode active layer was performed to measure the spectra. In the case of the first negative electrode active layer, the second negative electrode active layer was removed by peeling off the second negative electrode active layer after X-ray diffraction spectroscopy (XRD) of the second negative electrode active layer, and X-ray diffraction was measured on the exposed surface of the first negative electrode active layer. In addition, the X-ray diffraction (XRD) measurement conditions were as follows:

- Target: Cu (Kα ray) graphite monochromators
- Slit: Divergence slit = 1 degree, Reception slit = 0.1 mm, Scattering slit = 1 degree
- Measurement area: (110) face: 76.5°<2θ<78.5° / (004) face: 53.5°<2θ<56.0°.

From the spectra measured under the above conditions, the average optical index (O.I.) of the carbon-based active materials in each negative electrode active layer was calculated using Equation 1. The results are shown in Table 1:

[Equation 1]

$$O.I. = I_{004}/I_{110}$$

in Equation 1,

$I_{004}$ represents the area of the peak representing the (004) crystal face in the X-ray diffraction spectroscopy (XRD) measurement of the negative electrode active layer,

$I_{110}$ represents the area of the peak representing the (110) crystal face in an X-ray diffraction (XRD) measurement of the negative electrode active layer.

[Table 1]

| | Whether magnetic field was applied | Magnetic field application time [seconds] | First negative electrode active layer | | Second negative electrode active layer | |
|---|---|---|---|---|---|---|
| | | | Average aspect ratio of graphite | O.I. | Average aspect ratio of graphite | O.I. |
| Example 1 | O | 9~11 | 0.95 | 11 | 0.30 | 8 |
| Example 2 | O | 9~11 | 0.95 | 11 | 0.55 | 8 |
| Example 3 | O | 9~11 | 0.95 | 11 | 0.78 | 8 |
| Example 4 | O | 1~2 | 0.95 | 16 | 0.55 | 14 |

(continued)

| | Whether magnetic field was applied | Magnetic field application time [seconds] | First negative electrode active layer | | Second negative electrode active layer | |
|---|---|---|---|---|---|---|
| | | | Average aspect ratio of graphite | O.I. | Average aspect ratio of graphite | O.I. |
| Comparative Example 1 | X | O | 0.95 | 23 | 0.55 | 23 |
| Comparative Example 2 | O | 9~11 | 0.95 | 11 | 0.95 | 7 |
| Comparative Example 3 | O | 9~11 | 0.55 | 13 | 0.55 | 8 |

**Comparative Example 4-5. Preparation of a negative electrode for a lithium secondary battery**

The negative electrode for the lithium secondary battery was prepared by performing the same method as in Example 2, except that spherical natural graphite or flaky artificial graphite was used as the first carbon-based negative electrode active material. In this case, the average particle diameter ($D_{50}$) of the first carbon-based negative electrode active material was $15.5 \pm 0.1$ $\mu$m.

For prepared negative electrodes, ① scanning electron microscopy (SEM) analysis of the negative electrode active layer cross-section was performed to calculate the average aspect ratio of the carbon-based negative electrode active material contained in the negative electrode active layer. In addition, ② X-ray diffraction (XRD) of the first and second negative electrode active layers was performed to obtain the optical index (O.I.) of the carbon-based negative electrode active material contained in each layer. The results are shown in Table 2.

[Table 2]

| | Type of first carbon-based negative electrode active material | First negative electrode active layer | | Second negative electrode active layer | |
|---|---|---|---|---|---|
| | | Average aspect ratio of graphite | O.I. | Average aspect ratio of graphite | O.I. |
| Comparative Example 4 | Spherical natural graphite | 0.95 | 17 | 0.55 | 9 |
| Comparative Example 5 | flake-type artificial graphite | 0.95 | 12 | 0.55 | 8 |

**Examples 5-8 and Comparative Examples 6-10. Preparation of lithium secondary battery**

$LiNi_{0.7}Co_{0.1}Mn_{0.1}Al_{0.1}O_2$ with a particle size of 5 $\mu$m was prepared as a positive electrode active material, and mixed with a carbon-based conductive material and polyvinylidene fluoride as a binder in a weight ratio of 94:3:3 in N-methyl pyrrolidone (NMP) to form a slurry, cast on an aluminum thin plate, dried in a vacuum oven at 120°C, and rolled to prepare the positive electrode.

A 1 Ah class lithium secondary battery was assembled by interposing an 18 $\mu$m polypropylene separator between the positive electrode obtained above and the negative electrode prepared in Examples 1-4 and Comparative Examples 1-5, respectively, inserting it into the case, and then injecting an electrolyte composition.

Here, the type of negative electrode applied to each lithium secondary battery is shown in Table 3.

[Table 3]

| | Types of negative electrode applied |
|---|---|
| Example 5 | Negative electrode prepared in Example 1 |
| Example 6 | Negative electrode prepared in Example 2 |
| Example 7 | Negative electrode prepared in Example 3 |
| Example 8 | Negative electrode prepared in Example 4 |
| Comparative Example 6 | Negative electrode prepared in Comparative Example 1 |
| Comparative Example 7 | Negative electrode prepared in Comparative Example 2 |

(continued)

| Comparative Example 8 | Negative electrode prepared in Comparative Example 3 |
| Comparative Example 9 | Negative electrode prepared in Comparative Example 4 |
| Comparative Example 10 | Negative electrode prepared in Comparative Example 5 |

**Experimental Examples.**

To evaluate the performance of the negative electrodes according to the present disclosure, the following experiments were performed on each negative electrode and lithium secondary battery manufactured in the Examples and Comparative Examples.

1) Evaluating adhesion to the negative electrode current collector

Specimens were prepared by cutting the negative electrodes prepared in Examples 1-4 and Comparative Examples 1-5, respectively, so that the transverse and longitudinal lengths were 25 mm and 70 mm, respectively. Double-sided tape was used to attach the prepared specimens to a glass plate, which was arranged so that the current collector faced the glass plate. After fixing the specimen on the glass plate in the tensile tester, the negative electrode active layer of each negative electrode was pulled off at a speed of 100 mm/min at 25°C to form an angle of 90° with the negative electrode current collector. The peel force measured in real time was defined as the interfacial adhesion between the negative electrode current collector and the negative electrode active layer, and the measured results are shown in Table 4 below.

2) Evaluating 1C-rate fast charging

Each of the lithium secondary batteries prepared in Examples 5-8 and Comparative Examples 6-10 was activated by charging at 25 °C at a rate of 0.3 C to 4.2 V under CC-CV conditions and discharging at a rate of 0.3 C to 2.5 V under CC conditions.
Each activated lithium secondary battery was charged in a constant current-constant voltage (CC-CV) manner at a temperature of 25°C, and the time required for the state of charge (SOC) to reach 80% was measured. The charging consisted of a constant current (CC) charge at a current rate of 1.0 C-rate until the voltage reaches 4.2 V, followed by a constant voltage (CV) charge that maintains 4.2 V and cuts off when the current reaches 0.005 C-rate. The measured charging times are shown in Table 4 below.

[Table 4]

| | Type of negative electrode | Adhesion | Charging time (SOC 80%) |
|---|---|---|---|
| Example 5 | Negative electrode prepared in Example 1 | 34 gf/cm | 14 seconds |
| Example 6 | Negative electrode prepared in Example 2 | 33 gf/cm | 17 seconds |
| Example 7 | Negative electrode prepared in Example 3 | 34 gf/cm | 19 seconds |
| Example 8 | Negative electrode prepared in Example 4 | 30 gf/cm | 25 seconds |
| Comparative Example 6 | Negative electrode prepared in Comparative Example 1 | 25 gf/cm | 51 seconds |
| Comparative Example 7 | Negative electrode prepared in Comparative Example 2 | 28 gf/cm | 25 seconds |
| Comparative Example 8 | Negative electrode prepared in Comparative Example 3 | 8 gf/cm | 16 seconds |
| Comparative Example 9 | Negative electrode prepared in Comparative Example 4 | 30 gf/cm | 30 seconds |
| Comparative Example 10 | Negative electrode prepared in Comparative Example 5 | **18** gf/cm | 24 seconds |

As shown in Table 4, it can be seen that the negative electrode for a lithium secondary battery according to the present disclosure not only has excellent adhesion between the negative electrode active layer and the negative electrode current collector, but also completes charging at a fast rate under 1C-rate conditions.
Specifically, the negative electrodes of the Examples exhibited high adhesion of the first negative electrode active layer to the negative electrode current collector, greater than 30 gf/cm. Furthermore, the secondary batteries of the Examples including these negative electrodes reached 80% state of charge (SOC) in less than 25 seconds under standard constant current-constant voltage (CC-CV) charging conditions at 1C-rate.

In contrast, the negative electrodes of the Comparative Examples exhibited lower adhesion between the first negative electrode active layer and the negative electrode current collector of 28 gf/cm or less. However, the negative electrode of Comparative Example 4 has an adhesion of 30 gf/cm between the first negative electrode active layer and the negative electrode current collector, but the secondary battery including the negative electrode has been found to require more than 30 seconds to reach 80% state of charge (SOC).

This means that by controlling the average aspect ratio and optical index (O.I.) of the first carbon-based negative electrode active material and the second carbon-based negative electrode active material contained in the first and second negative electrode active layers, respectively, the adhesion of the negative electrode current collector to the negative electrode active layer and the charging rate at standard C-rate conditions can be improved.

From these results, it can be seen that the negative electrode for the lithium secondary battery according to the present disclosure has excellent life characteristics due to its high adhesion to the negative electrode current collector, and that the lithium secondary battery including it has excellent output characteristics and can be charged in a short time even at 1C-rate.

While the foregoing has been described with reference to preferred aspects of the disclosure, it will be appreciated by those skilled in the art or having ordinary knowledge of the art that various modifications and changes can be made to the disclosure without departing from the technical field of the disclosure as described in the patent claims that follow.

Thus, the technical scope of the present disclosure is not limited to what is disclosed in the detailed description of the specification, but should be defined by the claims of the patent.

**Claims**

1. A negative electrode for lithium secondary battery comprising:

   a negative electrode current collector,
   a first negative electrode active layer provided on at least one side of the negative electrode current collector and including a first carbon-based negative electrode active material, and
   a second negative electrode active layer provided on the first negative electrode active layer and including a second carbon-based negative electrode active material;
   wherein the first carbon-based negative electrode active material has an average aspect ratio greater than 0.85;
   wherein the second carbon-based negative electrode active material has an average aspect ratio less than or equal to 0.85;
   wherein the first negative electrode active layer has an optical index (O.I.) of 50 or less according to a following Equation 1:

   $$[\text{Equation 1}]$$

   $$\text{O.I.} = I_{004}/I_{110}$$

   in Equation 1,
   $I_{004}$ represents an area of a peak representing a (004) crystal face of a carbon-based negative electrode active material in a X-ray diffraction spectroscopy (XRD) measurement of a negative electrode active layer; and
   $I_{110}$ represents an area of a peak representing a (110) crystal face of the carbon-based negative electrode active material in an X-ray diffraction (XRD) measurement of the negative electrode active layer.

2. The negative electrode for lithium secondary battery of claim 1, wherein the average aspect ratio of the first carbon-based negative electrode active material is greater than 0.9 and less than 1.0, and
   the average aspect ratio of the second carbon-based negative electrode active material is 0.2 or more and less than 0.8.

3. The negative electrode for lithium secondary battery of claim 1, wherein the second negative electrode active layer has the optical index (O.I.) of from 0.01 to 10 according to Equation 1.

4. The negative electrode for lithium secondary battery of claim 1, wherein the first carbon-based negative electrode active material and the second carbon-based negative electrode active material include at least one of natural graphite or artificial graphite, respectively.

5. The negative electrode for lithium secondary battery of claim 1, wherein the first carbon-based negative electrode active material is artificial graphite.

6. The negative electrode for lithium secondary battery of claim 1, wherein the second negative electrode active layer has a porosity of from 20% to 30%.

7. The negative electrode for lithium secondary battery of claim 1, wherein the first negative electrode active layer has an average thickness ratio of from 1% to 100% based on an average thickness of the second negative electrode active layer.

8. The negative electrode for lithium secondary battery of claim 7, wherein an average total thickness of the first negative electrode active layer and the second negative electrode active layer is from 50 $\mu$m to 500 $\mu$m.

9. A manufacturing method of a negative electrode for lithium secondary battery according to claim 1, the manufacturing method comprising:

applying a first negative electrode slurry and a second negative electrode slurry such that the first negative electrode slurry is located on at least one side of the negative electrode current collector and the second negative electrode slurry is located on the first negative electrode slurry;
applying a magnetic field to the first negative electrode slurry located on at least one side of the negative electrode current collector and the second negative electrode slurry located on the first negative electrode slurry; and
after applying the magnetic field, drying the first negative electrode slurry located on at least one side of the negative electrode current collector and the second negative electrode slurry located on the first negative electrode slurry to form the negative electrode active layer.

10. The manufacturing method of a negative electrode for lithium secondary battery of claim 9, wherein applying the magnetic field is performed for a period of from 1 second to 20 seconds.

11. The manufacturing method of a negative electrode for lithium secondary battery of claim 9, wherein applying the magnetic field is performed with a magnetic field strength of from 1,000 G to 7,000 G.

12. A lithium secondary battery comprising:

an electrode assembly including a positive electrode, the negative electrode according to claim 1, and a separator disposed between the positive electrode and the negative electrode; and
an electrolyte composition in which the electrode assembly is impregnated.

13. The lithium secondary battery of claim 12, wherein the positive electrode includes a positive electrode active layer provided on at least one side of a positive electrode current collector, wherein the positive electrode active layer includes one or more positive electrode active materials represented by a following Chemical Formula 1 or a following Chemical Formula 2 :

[Chemical Formula 1]        $Li_x[Ni_yCo_zMn_wM^1_v]O_2$

[Chemical Formula 2]        $LiM^2_pMn_{2-p}O_4$

in Chemical Formula 1 and Chemical Formula 2,

$M^1$ is at least one element selected from W, Cu, Fe, V, Cr, Ti, Zr, Zn, Al, In, Ta, Y, La, Sr, Ga, Sc, Gd, Sm, Ca, Ce, Nb, Mg, B, or Mo;
$1.0 \leq x \leq 1.30$, $0.5 \leq y < 1$, $0 < z \leq 0.3$, $0 < w \leq 0.3$, and $0 \leq v \leq 0.1$, and $y+z+w+v=1$;
$M^2$ is Ni, Co, or Fe; and
p is $0.05 \leq p \leq 1.0$.

14. The lithium secondary battery of claim 13, wherein the positive electrode active materials includes one or more of $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}A$-

$I_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, or $LiNi_{0.3}Mn_{1.7}O_4$.

15. The lithium secondary battery of claim 12, wherein the electrode assembly is a stack-type electrode assembly; a zigzag electrode assembly; or a zigzag-stack type electrode assembly.

## INTERNATIONAL SEARCH REPORT

| International application No. |
| --- |
| **PCT/KR2024/009716** |

| | | |
| --- | --- | --- |
| **A.** | **CLASSIFICATION OF SUBJECT MATTER** | |

**H01M 4/133**(2010.01)i; **H01M 4/1393**(2010.01)i; **H01M 4/04**(2006.01)i; **H01M 4/525**(2010.01)i; **H01M 10/052**(2010.01)i; **H01M 4/02**(2006.01)i

According to International Patent Classification (IPC) or to both national classification and IPC

| | | |
| --- | --- | --- |
| **B.** | **FIELDS SEARCHED** | |

Minimum documentation searched (classification system followed by classification symbols)

H01M 4/133(2010.01); H01M 10/0525(2010.01); H01M 4/13(2010.01); H01M 4/1393(2010.01); H01M 4/583(2010.01); H01M 50/249(2021.01); H01M 50/258(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 탄소계 활물질(carbon based active material), 종횡비(aspect ratio), 정렬도(orientation index, O.I), 자기장(magnetic field)

| | | |
| --- | --- | --- |
| **C.** | **DOCUMENTS CONSIDERED TO BE RELEVANT** | |

| Category* | Citation of document, with indication, where appropriate, of the relevant passages | Relevant to claim No. |
| --- | --- | --- |
| Y | CN 113036298 A (CONTEMPORARY AMPEREX TECHNOLOGY CO., LTD.) 25 June 2021 (2021-06-25)<br>     See claims 1, 3, 4, 6 and 7; and paragraphs [0076]-[0080], [0086], [0091] and [0100]. | 1-15 |
| Y | KR 10-2544496 B1 (LG ENERGY SOLUTION, LTD.) 20 June 2023 (2023-06-20)<br>     See claims 1, 3, 4, 10 and 11; paragraphs [0069]-[0072], [0121]-[0136] and [0146]; and table 1, example 1. | 1-15 |
| A | KR 10-2536147 B1 (LG ENERGY SOLUTION, LTD.) 26 May 2023 (2023-05-26)<br>     See claims 1 and 4-11; and paragraphs [0076]-[0078]. | 1-15 |
| A | KR 10-2018-0035693 A (LG CHEM, LTD.) 06 April 2018 (2018-04-06)<br>     See claims 1-20; and paragraphs [0041], [0047] and [0050]. | 1-15 |
| A | KR 10-2019-0042335 A (LG CHEM, LTD.) 24 April 2019 (2019-04-24)<br>     See claims 1-17. | 1-15 |

| | |
| --- | --- |
| ☐ Further documents are listed in the continuation of Box C. | ☑ See patent family annex. |

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 October 2024** | **27 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009716**

| Patent document cited in search report | | | Publication date (day/month/year) | Patent family member(s) | | | Publication date (day/month/year) |
|---|---|---|---|---|---|---|---|
| CN | 113036298 | A | 25 June 2021 | CN | 113036298 | B | 11 February 2022 |
| KR | 10-2544496 | B1 | 20 June 2023 | CN | 118541828 | A | 23 August 2024 |
| | | | | EP | 4447164 | A1 | 16 October 2024 |
| | | | | WO | 2024-136079 | A1 | 27 June 2024 |
| KR | 10-2536147 | B1 | 26 May 2023 | WO | 2024-111906 | A1 | 30 May 2024 |
| KR | 10-2018-0035693 | A | 06 April 2018 | CN | 108701816 | A | 23 October 2018 |
| | | | | CN | 108701816 | B | 12 November 2021 |
| | | | | EP | 3396745 | A2 | 31 October 2018 |
| | | | | EP | 3396745 | A4 | 12 June 2019 |
| | | | | EP | 3396745 | B1 | 01 November 2023 |
| | | | | KR | 10-1966144 | B1 | 05 April 2019 |
| | | | | US | 2019-0305308 | A1 | 03 October 2019 |
| KR | 10-2019-0042335 | A | 24 April 2019 | KR | 10-2335314 | B1 | 06 December 2021 |

Form PCT/ISA/210 (patent family annex) (July 2022)

22

**EP 4 629 318 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230089506

- KR 1020220064389